# FASCICULE DE BREVET EUROPEEN

(11) **EP 2 110 570 B1**
(45) Date de publication et mention de la délivrance du brevet: **13.10.2010**
(21) Numéro de dépôt: 09167434.1
(22) Date de dépôt: 06.02.2007
(51) Int. Cl.: F16C 25/08, B62D 1/16, F16C 33/61

(54) **Procédé de fabrication d'un dispositif de roulement**
Verfahren zur Herstellung einer Rollvorrichtung
Method of manufacturing a bearing device

(43) Date de publication de la demande: 21.10.2009
(62) Demande divisionnaire de: 07101820.4
(73) Titulaire: Aktiebolaget SKF, 415 50 Göteborg (SE)
(72) Inventeur: Delos, Jacques, 45390 Desmonts (FR); Montboeuf, Bruno, 37390 Cerelles (FR)
(74) Mandataire: Dossmann, Gérard

(56) Documents cités:
- WO-A-03/023242
- DE-A1- 19 604 036
- FR-A1- 2 594 189
- FR-A1- 2 861 441
- US-A- 3 876 266
- US-A- 6 158 896

## Description

L'invention concerne le domaine des paliers à roulement, notamment pour colonnes de direction.

On connaît, par les documents FR 2 594 189 et US 3 876 266, des roulements pourvus de pistes rapportées en tôle emboutie et d'une rondelle de caoutchouc en forme de tore disposée dans l'enveloppe pour assurer la précontrainte élastique. Les pistes rapportées sont relativement onéreuses à fabriquer en raison des étapes de découpe avec perte de matière, d'emboutissage et de traitement thermique. Le moulage d'une rondelle en caoutchouc est également une opération relativement onéreuse.

Le document WO 03/023 242 décrit un palier à roulement pour colonne de direction comprenant une enveloppe extérieure à section en U, au moins deux fils en acier traité disposés dans l'enveloppe extérieure et des éléments roulants tels que des billes disposés au contact des fils qui constituent les chemins de roulement. Les fils se présentent sous la forme de joncs annulaires dont les extrémités viennent bout à bout lors de leur mise en place dans l'enveloppe. La bague intérieure peut être de type massive avec un chemin de roulement ou comporter également une enveloppe et deux joncs. On réalise ainsi un roulement à trois ou quatre points de contact capable de fonctionner aussi bien sous charge axiale que sous charge radiale ou sous charge combinée. Afin que le roulement puisse fonctionner sans jeu, comme cela est généralement requis dans les colonnes de direction, on dispose une rondelle de précontrainte conique de type « Belleville » entre l'une des portions radiales de l'enveloppe extérieure et le jonc correspondant. Le fonctionnement d'un tel palier donne satisfaction. Toutefois, le coût de la rondelle métallique élastique est relativement élevé.

Un procédé de fabrication d'un dispositif de roulement selon le préambule de la revendication 1, est connu du document FR 2 861 441 A.

La présente invention vise à remédier aux inconvénients décrits ci-dessus.

La présente invention vise un procédé de fabrication d'un palier à roulement particulièrement économique.

Un tel procédé de fabrication d'un dispositif de roulement est décrit dans la revendication 1.

La présente invention concerne un procédé de fabrication de roulement comprenant une étape d'extrusion d'un tube en matière élastique, une étape de coupe d'une portion du tube pour former un élément de section sensiblement rectangulaire, une étape de montage dudit élément de section sensiblement rectangulaire dans l'enveloppe extérieure, une étape de montage du premier jonc en contact avec ledit élément à section sensiblement rectangulaire, une étape de montage d'un sous-ensemble comprenant la bague intérieure et les éléments roulants, une étape de montage du deuxième jonc et une étape de sertissage d'une extrémité de la partie axiale de l'enveloppe pour former la deuxième portion radiale de ladite enveloppe et précontraindre le roulement ainsi formé. La déformation élastique de l'élément à section rectangulaire qui forme un élément de précontrainte maintient la précontrainte de façon permanente. Il s'avère avantageux de maintenir les éléments roulants par une cage, de telle sorte que la bague intérieure, les éléments roulants et la cage puissent être manipulés avec un faible risque de perte de pièces.

On bénéficie ainsi d'un roulement particulièrement économique et bien adapté aux colonnes de direction dans lesquelles les vitesses de rotation sont faibles, mais les désalignements possibles de l'arbre par rapport au logement peuvent être élevés. D'autre part, les roulements de colonne de direction doivent fonctionner avec un jeu nul et un couple de rotation aussi réduit et aussi constant que possible.

La présente invention sera mieux comprise à l'étude de la description de quelques modes de réalisation pris à titre d'exemples nullement limitatifs et illustrés par les dessins annexés, sur lesquels :
- la figure 1 est une vue schématique en coupe axiale d'une partie de colonne de direction ;
- la figure 2 est une vue de côté en élévation d'un tube en élastomère en cours de découpe ;
- la figure 3 est une vue de face en élévation d'un élément de précontrainte ;
- la figure 4 est une vue de détail en coupe radiale de l'élément de précontrainte de la figure 3 ;
- la figure 5 est une vue partielle en coupe axiale d'un palier à roulement ;

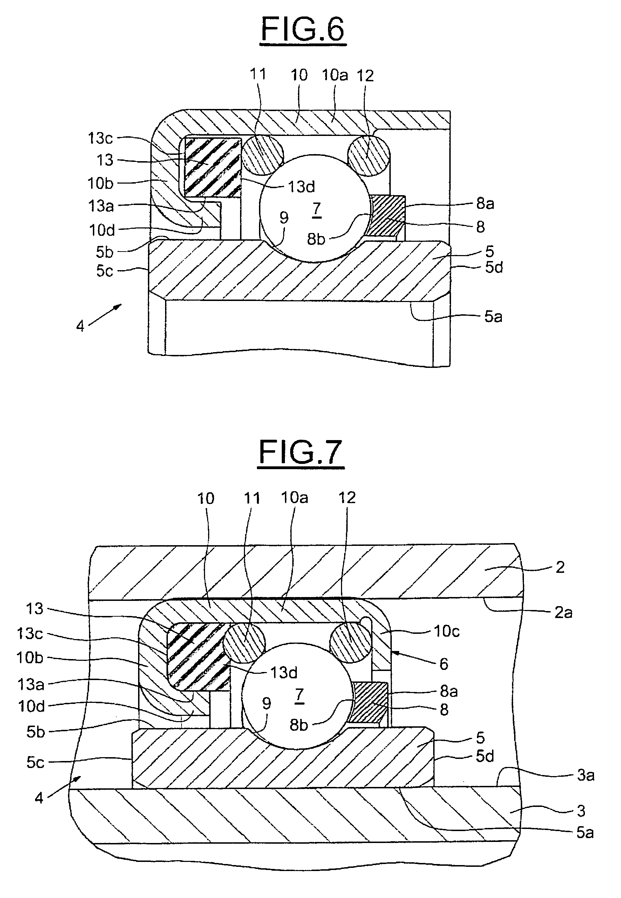

- la figure 6 est une vue du palier de la figure 5 en cours de montage ; et
- la figure 7 est une vue de détail de la figure 1.

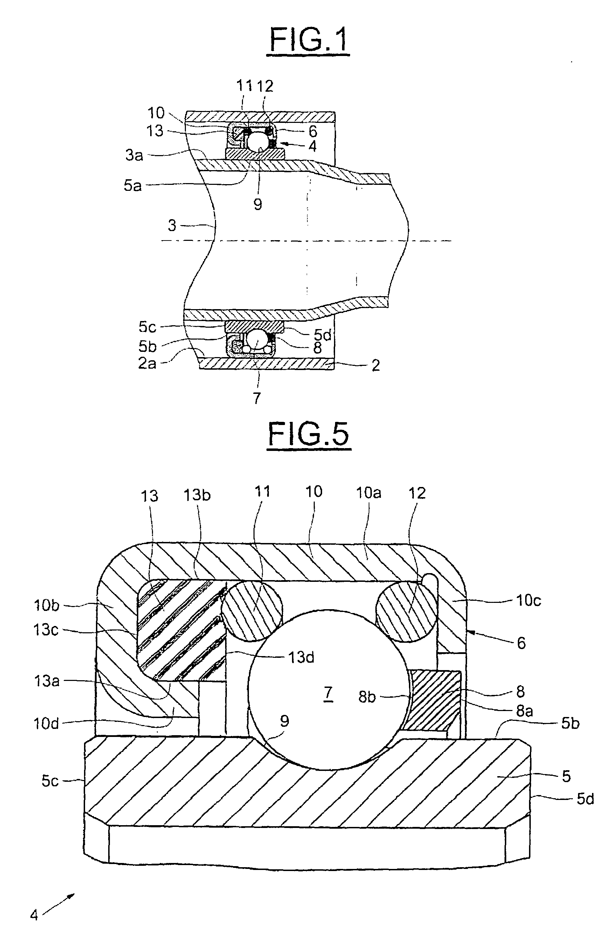

Comme on peut le voir sur la figure 1, la colonne de direction 1 comprend un logement 2 tubulaire pourvu d'un alésage 2a, un arbre 3 pourvu d'une surface extérieure axiale 3a, et un palier à roulement 4 disposé entre l'alésage 2a du logement 2 et la surface extérieure 3a de l'arbre 3.

Comme on peut le voir sur les figures 1 et 5, le palier à roulement 4 comprend une bague intérieure 5, une bague extérieure 6, une rangée d'éléments roulants 7, ici des billes, et une cage 8 de maintien de l'espacement circonférentiel des éléments roulants 7. La bague intérieure 5 est de type à gorge profonde et comprend un alésage 5a en contact avec la surface extérieure 3a de l'arbre 3, une surface extérieure 5b et deux surfaces frontales radiales 5c et 5d. Un chemin de roulement 9 de forme toroïdale est ménagé, par exemple par usinage, à partir de la surface extérieure 5b et est en contact avec les éléments roulants 7. Dans l'exemple illustré sur la figure 5, le chemin de roulement 9 présente un rayon pris en section axiale nettement supérieur aux rayons des éléments roulants 7, ici des billes.

La cage 8 présente des alvéoles 8b dans lesquelles sont disposés les éléments roulants 7 et un talon annulaire 8a permettant de relier ensemble les portions de cage disposées entre les alvéoles. Le talon 8a s'étend axialement du côté de la surface frontale 5d.

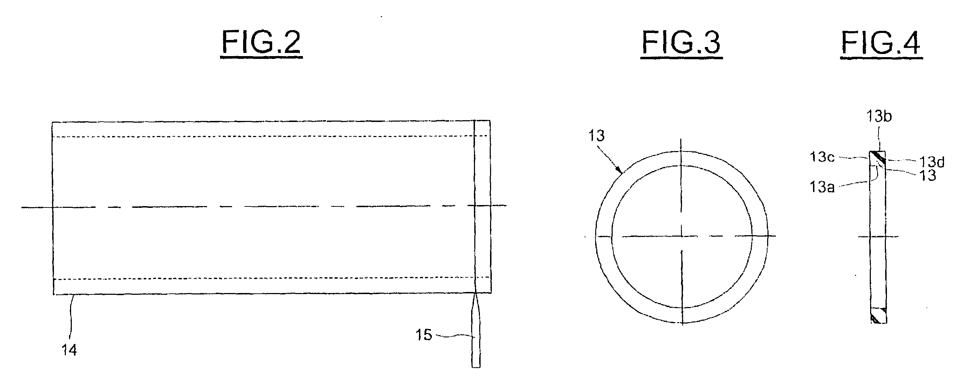

La bague extérieure 6 comprend une enveloppe 10 annulaire, par exemple formée à partir de tôle d'acier, deux joncs 11 et 12, chacun formé par exemple à partir d'un fil d'acier plié en forme de tore avec extrémités en contact mutuel, et une rondelle de précontrainte 13. La rondelle de précontrainte 13 est avantageusement formée à partir d'un matériau élastique, par exemple à base d'élastomère. On peut donner à titre d'exemple d'élastomère, le caoutchouc nitrile, le polyuréthane, ou encore l'éthylène-propylène-dyène monomère, connu aussi sous l'abréviation EPDM. La rondelle de précontrainte 13 présente à l'état libre, illustré sur la figure 4, une section rectangulaire avec un alésage 13a, une surface extérieure axiale 13b et deux surfaces radiales 13c et 13d.

L'enveloppe 10 comprend une partie axiale 10a, deux portions radiales 10b et 10c formées aux extrémités de la portion axiale 10a et s'étendant radialement vers l'intérieur, et une portion axiale 10d formée à partir de l'extrémité de petit diamètre de la portion radiale 10b et s'étendant en direction des éléments roulants 7. En d'autres termes, le rebord axial 10d forme une portion axiale de petit diamètre par rapport à la portion axiale 10a de grand diamètre. La portion axiale 10a, la portion radiale 10b et le rebord axial 10d présentent une épaisseur sensiblement constante et forment une chambre annulaire fermée sur trois côtés et ouverte axialement sur un côté et dans laquelle est montée la rondelle de précontrainte 13. En raison des congés de raccordement entre la portion axiale 10a, la portion radiale 10b et le rebord axial 10d, la rondelle de précontrainte 13 est légèrement déformée, en particulier dans les angles saillants entre l'alésage 13a et la surface radiale 13c et entre la surface extérieure axiale 13b et la surface radiale 13c. La portion radiale 10c, disposée du côté opposé à la portion radiale 10b, présente une épaisseur réduite par rapport aux autres portions de l'enveloppe 10, ce qui permet son sertissage à la fin du montage du roulement, et ce en limitant le risque de déformation des autres parties.

Le jonc 11 est disposé en contact avec l'alésage de la portion axiale 10a de l'enveloppe 10 et avec la surface radiale 13d de la rondelle de précontrainte 13, du côté opposé à la portion radiale 10b. Le jonc 11 est également en contact avec les éléments roulants 7. Le jonc 12 est en contact avec l'alésage de la portion axiale 10a et avec la surface radiale intérieure de la portion radiale 10c de l'enveloppe 10 et est également en contact avec les éléments roulants 7. Les joncs 11 et 12 assurent ainsi chacun un point de contact avec les éléments roulants et permettent donc de reprendre des charges radiales mais également axiales. Les joncs 11 et 12 peuvent être identiques et fabriqués par pliage d'un fil d'acier pré-traité, ce qui est très économique.

La tangente au point de contact entre les éléments roulants 7 et le jonc 11 est sensiblement inclinée à 45° par rapport à l'axe. Il en va de même de la tangente au point de contact entre les éléments roulants 7 et le jonc 12, de telle sorte que lesdites deux tangentes présentent entre elles un angle de l'ordre de 90°, d'où un excellent contact oblique entre chaque jonc 11, 12 et les éléments roulants 7. La suppression du jeu est assurée par l'enfermement de la rondelle de précontrainte 13 et des joncs 11et 12 entre les portions radiales 10b et 10c de l'enveloppe 10, et par l'élasticité axiale de la rondelle de précontrainte 13 dont la surface radiale 13d est déformée par l'appui exercé sur le jonc 11. La rondelle de précontrainte 13 assure ainsi une précontrainte permanente axiale sur le jonc 11 et permet de supprimer le jeu entre le jonc 11, les éléments roulants 7 et le jonc 12.

La rondelle de précontrainte 13 est souple et déformable et est très bien centrée entre la portion axiale 10a et le rebord axial 10d et maintenue dans cet espace annulaire, ce qui permet de faciliter les opérations d'assemblage en évitant à la rondelle 13 de prendre accidentellement une forme non circulaire ou de s'échapper de sa position correcte dans l'enveloppe 10 lors des manipulations de pièces. On peut ainsi automatiser plus facilement les opérations d'assemblage et les porter à un haut degré de fiabilité. En outre, la rondelle de précontrainte 13 étant maintenue radialement entre deux parois axiales, lors de la mise en précontrainte, la matière constitutive de ladite rondelle de précontrainte 13 ne peut pas fluer radialement, ce qui diminuerait l'élasticité axiale et l'efficacité de ladite rondelle de précontrainte 13.

Le rebord axial 10d dirigé vers les éléments roulants 7, présente deux autres avantages, à savoir un raidissement de la structure de l'enveloppe 10 et la possibilité de réaliser un passage étroit avec la bague intérieure 5 sur une certaine longueur axiale, ce qui renforce la protection du roulement 4 contre l'intrusion d'éléments polluants en provenance de l'extérieur. En d'autres termes, l'étanchéité par passage étroit est formée entre le rebord axial 10d et la surface extérieure axiale 5b de la rondelle intérieure 5 située du côté de la surface frontale 5c.

La rondelle de précontrainte 13 possède à l'état libre une section sensiblement rectangulaire en section droite, ce qui lui permet d'être réalisée à partir d'un tube de matière souple. On peut utiliser à cet usage un élastomère sous la forme d'un tube extrudé 14, voir figure 2, ce mode de fabrication par extrudage étant particulièrement économique, ledit tube étant ensuite tronçonné en rondelles à l'épaisseur désirée au moyen d'un outil coupant 15. Avantageusement, la dureté shore du matériau de la rondelle de précontrainte 13 sera choisie dans une fourchette comprise entre 67 et 87 shore. Ce procédé est extrêmement économique par rapport à un procédé de fabrication par moulage de la rondelle.

Pour l'assemblage du roulement, on peut, d'une part, constituer un sous-ensemble comprenant la bague intérieure 5, les éléments roulants 7 et la cage 8, et, d'autre part, amener la rondelle de précontrainte 13 dans l'enveloppe 10, la portion radiale 10c n'ayant pas encore été sertie et se présentant donc comme une prolongation axiale de la portion axiale 10a. La rondelle de précontrainte 13 est ainsi amenée par un simple mouvement axial. Puis on amène le jonc 11 en contact avec la rondelle de précontrainte 13 et l'alésage de la portion axiale 10a de l'enveloppe 10, puis le sous-ensemble constitué par la bague intérieure 5, les éléments roulants 7 et la cage 8, les éléments roulants 7 venant en contact avec le jonc 11, puis le jonc 12 en contact avec les éléments roulants 7 et l'alésage de la portion axiale 10a de l'enveloppe 10. Ensuite, on procède au sertissage de la portion radiale 10c pour lui conférer sa forme définitive illustrée sur les figures 1 et 5. La portion radiale 10c vient alors en contact avec le jonc 12 qu'elle tend à déplacer en direction de la portion radiale opposée 10d, d'où une déformation de la rondelle de précontrainte 13 et une mise en précontrainte de l'ensemble de ces éléments en contact.

On réalise ainsi un roulement de colonne de direction économique et fiable.

## Revendications

1. Procédé de fabrication d'un dispositif de roulement comprenant une bague extérieure (6) et une bague intérieure (5) munies chacune d'un chemin de roulement pour des éléments roulants (7) disposés entre lesdites bagues au contact desdits chemins de roulement, au moins l'une des bagues comprenant une enveloppe (10) pourvue d'une portion axiale et de deux portions radiales se raccordant aux extrémités de la portion axiale et deux joncs annulaires (11, 12) disposés dans ladite enveloppe pour former des chemins de roulement, un élément annulaire (13) de précontrainte réalisé en matière élastique et de section sensiblement rectangulaire à l'état libre étant disposé dans l'enveloppe, **caractérisé par le fait qu'**il comprend les étapes suivantes :
- extrusion d'un tube en matière élastique ;
- coupe d'une portion dudit tube pour former un élément annulaire de section sensiblement rectangulaire :
- montage dudit élément annulaire de section sensiblement rectangulaire dans ladite enveloppe ;
- montage d'un premier jonc annulaire en contact avec ledit élément annulaire à section sensiblement rectangulaire ;
- montage d'un sous-ensemble comprenant la bague intérieure (5) et les éléments roulants (7) ;
- montage d'un deuxième jonc annulaire ;
- sertissage d'une extrémité de la partie axiale de l'enveloppe pour former une des deux portions radiales précitées et précontraindre le roulement ainsi formé.

## Claims

1. Method of manufacturing a rolling bearing device comprising an outer race (6) and an inner race (5) each provided with a raceway for rolling elements (7) positioned between the said races in contact with the said raceways, at least one of the races comprising an envelope (10) provided with an axial portion and with two radial portions connecting to the ends of the axial portion and two annular rings (11, 12) positioned in the said envelope to form raceways, a preloading annular element (13) made of an elastic material and of substantially rectangular cross section in the unconstrained state being positioned inside the envelope, **characterized in that** it comprises the following steps:
- extruding a tube made of an elastic material;
- cutting off a portion of the said tube to form an annular element of substantially rectangular cross section;
- mounting the said annular element of substantially rectangular cross section inside the said envelope;
- mounting a first annular ring in contact with the said annular element of substantially rectangular cross section;
- mounting a subassembly comprising the inner race (5) and the rolling elements (7);
- mounting a second annular ring;
- crimping one end of the axial part of the envelope to form one of the two aforementioned radial portions and to preload the rolling bearing thus formed.

## Patentansprüche

1. Herstellungsverfahren für eine Wälzlagervorrichtung, die einen Außenring (6) und einen Innenring (5) aufweist, die mit Laufbahnen für Wälzkörper (7) versehen sind, die zwischen den Ringen in Kontakt mit den Laufbahnen angeordnet sind, wobei wenigstens einer der Ringe eine Umhüllung (10) aufweist, die mit einem Axialbereich und zwei Radialbereichen, die sich an Enden des Axialbereiches anschließen, und zwei Ringleisten (11,12) versehen ist, die in der Umhüllung angeordnet sind, um Laufbahnen zu bilden, und ein ringförmiges Vorspannelement (13), das aus einem elastischen Material mit im freien Zustand im wesentlichen rechteckigem Querschnitt hergestellt ist, in der Umhüllung angeordnet ist, **dadurch gekennzeichnet, dass** es die folgenden Schritte aufweist:
- Extrusion einer Röhre aus einem elastischen Material;
- Abschneiden eines Teils dieser Röhre, um ein Ringelement mit im wesentlichen rechteckigem Querschnitt zu bilden;
- Montage des Ringelements mit im wesentlichen rechteckigem Querschnitt in der Umhüllung;
- Montage einer ersten Ringleiste in Kontakt mit dem Ringelement mit im wesentlichen rechteckigem Querschnitt;
- Montage einer Untergruppe, die den Innenring (5) und die Wälzkörper (7) umfasst;
- Montage einer zweiten Ringleiste;
- Umbiegen eines Endes des Axialbereiches der Umhüllung, um einen der beiden oben genannten Radialbereiche auszubilden und das derart gebildete Wälzlager vorzuspannen.
